# EUROPEAN PATENT APPLICATION

(11) **EP 4 521 727 A1**
(43) Date of publication of application: **12.03.2025**
(21) Application number: 23829990.3
(22) Date of filing: 15.06.2023
(51) Int. Cl.: H04M 1/72454, G06F 3/0486

(54) **DEVICE INTERACTION METHOD, ELECTRONIC DEVICE AND COMPUTER-READABLE STORAGE MEDIUM**

(30) Priority: 30.06.2022 CN 202210781200
(71) Applicant: Huawei Technologies Co., Ltd., Shenzhen, Guangdong 518129 (CN)
(72) Inventor: XUE, Bo, Shenzhen, Guangdong 518129 (CN)
(74) Representative: Maiwald GmbH
(86) International application number: PCT/CN2023/100480
(87) International publication number: WO 2024/001810

(57) **Abstract**

This application is applicable to the field of terminal technologies, and in particular, relates to a device interaction method, an electronic device, and a computer-readable storage medium. In the method, when a first electronic device needs to perform interaction, the first electronic device determines, based on a current application scenario, a first interaction function that may be required by a user, determines, from the first interaction function based on device information of the first electronic device and device information of a second electronic device, a second interaction function supported by the second electronic device, and uniformly displays the second interaction function in an interface of the first electronic device, that is, displays, based on the current application scenario, the second interaction function that may need to be used by the user, so that the user quickly selects an interaction function based on the current application scenario, to improve device interaction efficiency. In addition, the interface of the first electronic device is used as a unified entry for interaction between the first electronic device and the second electronic device, so that device interaction performed by the user is facilitated, and user experience is improved.

## Description

This application claims priority to Chinese Patent Application No. 202210781200.X, filed with the China National Intellectual Property Administration on June 30, 2022 and entitled "DEVICE INTERACTION METHOD, ELECTRONIC DEVICE, AND COMPUTER-READABLE STORAGE MEDIUM", which is incorporated herein by reference in its entirety.

### TECHNICAL FIELD

This application pertains to the field of terminal technologies, and in particular, to a device interaction method, an electronic device, and a computer-readable storage medium.

### BACKGROUND

With development of internet of things technologies, increasingly more devices may interact with each other, for example, screen casting, sound casting, multi-screen collaboration, and distributed cameras. When a device supports a plurality of interaction capabilities, a user needs to determine a currently required interaction capability, and trigger the interaction capability through an entry corresponding to the interaction capability. For example, when a tablet supports both multi-screen collaboration and a distributed camera, if the user determines that a mobile phone needs to perform multi-screen collaboration, the user may tap a tablet icon in a control center of the mobile phone to perform multi-screen collaboration with the tablet. If the user determines that the mobile phone needs to use the distributed camera, the user needs to open a camera application, and tap a button corresponding to the distributed camera to invoke a camera of the tablet. In other words, existing device interaction function entries are scattered, which affects user experience.

### SUMMARY

Embodiments of this application provide a device interaction method, an electronic device, and a computer-readable storage medium, to resolve a problem that existing device interaction function entries are scattered, which affects user experience.

According to a first aspect, an embodiment of this application provides a device interaction method, applied to a first electronic device, where the method may include:
determining a current application scenario of the first electronic device, and determining at least one first interaction function corresponding to the application scenario;
determining, based on the first interaction function, device information of the first electronic device, and device information of a second electronic device, a second interaction function corresponding to the second electronic device, where the second interaction function is one or more items in the first interaction function, and the second electronic device is associated with the first electronic device;
displaying the second interaction function corresponding to the second electronic device; and
in response to a first operation on a third interaction function, determining to perform the third interaction function with the second electronic device, where the third interaction function is one item in the second interaction function corresponding to the second electronic device.

In the foregoing device interaction method, when the first electronic device needs to perform interaction, the first electronic device may determine, based on the current application scenario of the first electronic device, the first interaction function that may need to be performed by a user, determine, from the first interaction function based on the device information of the first electronic device and the device information of the second electronic device, the second interaction function supported by the second electronic device, and uniformly display, in an interface of the first electronic device, the second interaction function supported by the second electronic device. That is, the second interaction function is an interaction function that is supported by the second electronic device and that corresponds to the current application scenario of the first electronic device. The second interaction function may be all interaction functions supported by the second electronic device, or may be a part of all interaction functions supported by the second electronic device, to display, based on the current application scenario, the second interaction function that may need to be used by the user, so that the user quickly selects an interaction function based on the current application scenario, to improve device interaction efficiency. In addition, the interface of the first electronic device is used as a unified entry for interaction between the first electronic device and the second electronic device, so that device interaction performed by the user is facilitated, and user experience is improved.

For example, the determining a current application scenario of the first electronic device may include:
detecting a preset operation; and
in response to the preset operation, determining the current application scenario of the first electronic device.

In the device interaction method provided in this implementation, the first electronic device may determine, based on whether the preset operation is detected, whether the first electronic device needs to perform device interaction, so as to accurately identify an interaction intention of the user based on the preset operation.

In an example, the preset operation includes: enabling a preset area of the first electronic device to be in touch with a preset area of the second electronic device.

In another example, the preset operation includes: entering a first interface of the first electronic device, or tapping a second control in the first interface, or dragging the second control in the first interface and releasing the second control when a distance between the second control and a first control is less than a preset threshold, where the first interface includes the second control, or the first interface includes the first control and the second control, the first control is a control corresponding to the first electronic device, and the second control is a control corresponding to the second electronic device.

In a possible implementation, the displaying the second interaction function corresponding to the second electronic device may include:
in response to a second operation on the second control, displaying the second interaction function corresponding to the second electronic device.

Optionally, the second operation includes: tapping the second control, or dragging the second control and releasing the second control when the distance between the second control and the first control is less than the preset threshold.

In the device interaction method provided in this implementation, after determining a second interaction function corresponding to each second electronic device, the first electronic device may display, based on a tap operation, a drag operation, or the like on a second control corresponding to a second electronic device, a second interaction function corresponding to the second electronic device, that is, display the second interaction function corresponding to the second electronic device that the user needs to interact with, so that the user selects the second interaction function corresponding to the second electronic device to perform device interaction, thereby improving interaction convenience and improving user experience.

In another possible implementation, after the determining a second interaction function corresponding to the second electronic device, the method may further include:
displaying a function icon corresponding to the second interaction function; and
the displaying the second interaction function corresponding to the second electronic device may include:
   in response to a tap operation on the function icon, displaying the second interaction function corresponding to the second electronic device.

In the device interaction method provided in this implementation, after determining the second interaction function corresponding to each second electronic device, the first electronic device may display the function icon, and may display the second interaction function corresponding to each second electronic device when the tap operation on the function icon is detected, that is, may display the second interaction function corresponding to the second electronic device when the user needs to select an interaction function.

In another possible implementation, after the determining a second interaction function corresponding to the second electronic device, the method may further include:
in response to a third operation on the second control, displaying a function icon corresponding to the second interaction function; and
the displaying the second interaction function corresponding to the second electronic device may include:
   in response to a tap operation on the function icon, displaying the second interaction function corresponding to the second electronic device.

Optionally, the third operation includes: tapping the second control, or dragging the second control and releasing the second control when the distance between the second control and the first control is less than the preset threshold.

In the device interaction method provided in this implementation, after determining the second interaction function corresponding to each second electronic device, the first electronic device may display, based on a tap or drag operation on a second control, a function icon corresponding to a second electronic device corresponding to the second control, and when detecting a tap or drag operation on the function icon, display a second interaction function corresponding to the second electronic device, that is, display, based on the tap or drag operation of the user, the second interaction function corresponding to the second electronic device that the user needs to perform device interaction, so that device interaction is facilitated, and user experience is improved.

In an example, the determining at least one first interaction function corresponding to the application scenario may include:
determining, based on a preset correspondence between an application scenario and an interaction function, the at least one first interaction function corresponding to the application scenario.

In the device interaction method provided in this implementation, the first electronic device may directly determine, based on the preset correspondence between the application scenario and the interaction function, the first interaction function corresponding to the application scenario, that is, the first interaction function may include an interaction function supported by the first electronic device, and may also include an interaction function that is not supported by the first electronic device.

In another example, the determining at least one first interaction function corresponding to the application scenario may include:
determining, based on the device information of the first electronic device and a preset correspondence between an application scenario and an interaction function, the first interaction function corresponding to the application scenario, where the device information of the first electronic device includes information about an interaction function supported by the first electronic device.

In the device interaction method provided in this implementation, the first electronic device may determine, based on the device information of the first electronic device and the preset correspondence between the application scenario and the interaction function, the first interaction function corresponding to the application scenario, that is, the first interaction function includes only an interaction function supported by the first electronic device. This can effectively reduce a quantity of first interaction functions, and increase a speed of determining the second interaction function.

For example, the determining, based on the first interaction function, device information of the first electronic device, and device information of a second electronic device, a second interaction function corresponding to the second electronic device may include:
determining, for each first interaction function, a first constraint condition and a second constraint condition that correspond to the first interaction function, where the first constraint condition is a condition that needs to be met by a transmitting end corresponding to the first interaction function, and the second constraint condition is a condition that needs to be met by a receiving end corresponding to the first interaction function; and
determining, from the first interaction function based on the first constraint condition, the device information of the first electronic device, the second constraint condition, and the device information of the second electronic device, the second interaction function corresponding to the second electronic device.

In the device interaction method provided in this implementation, after determining the first interaction function corresponding to the application scenario, the first electronic device may determine the first constraint condition and the second constraint condition that correspond to each first interaction function. Therefore, the first electronic device may determine, from the first interaction function based on the first constraint condition, the second constraint condition, the device information of the first electronic device, and the device information of the second electronic device, the second interaction function corresponding to the second electronic device. That is, the second interaction function is an interaction function that corresponds to the application scenario and that is in interaction functions supported by the second electronic device. The second interaction function may be all the interaction functions supported by the second electronic device, or may be a part of the interaction functions supported by the second electronic device, to determine, based on the application scenario, an interaction function that is most likely to be used by the user in the interaction functions supported by the second electronic device as the second interaction function, so that the user quickly selects the interaction function, to improve device interaction efficiency and improve user experience.

According to a second aspect, an embodiment of this application provides a device interaction apparatus, applied to a first electronic device, where the apparatus may include:
an application scenario determining module, configured to: determine a current application scenario of the first electronic device, and determine at least one first interaction function corresponding to the application scenario;
an interaction function determining module, configured to determine, based on the first interaction function, device information of the first electronic device, and device information of a second electronic device, a second interaction function corresponding to the second electronic device, where the second interaction function is one or more items in the first interaction function, and the second electronic device is associated with the first electronic device;
an interaction function display module, configured to display the second interaction function corresponding to the second electronic device; and
an interaction execution module, configured to: in response to a first operation on a third interaction function, determine to perform the third interaction function with the second electronic device, where the third interaction function is one item in the second interaction function corresponding to the second electronic device.

For example, the application scenario determining module is further configured to: detect a preset operation; and in response to the preset operation, determine the current application scenario of the first electronic device.

In an example, the preset operation includes: enabling a preset area of the first electronic device to be in touch with a preset area of the second electronic device.

In another example, the preset operation includes: entering a first interface of the first electronic device, or tapping a second control in the first interface, or dragging the second control in the first interface and releasing the second control when a distance between the second control and a first control is less than a preset threshold, where the first interface includes the second control, or the first interface includes the first control and the second control, the first control is a control corresponding to the first electronic device, and the second control is a control corresponding to the second electronic device.

In a possible implementation, the interaction function display module is further configured to: in response to a second operation on the second control, display the second interaction function corresponding to the second electronic device.

Optionally, the second operation includes: tapping the second control, or dragging the second control and releasing the second control when the distance between the second control and the first control is less than the preset threshold.

In another possible implementation, the apparatus may further include:
a first icon display module, configured to display a function icon corresponding to the second interaction function; and
the interaction function display module is further configured to: in response to a tap operation on the function icon, display the second interaction function corresponding to the second electronic device.

In another possible implementation, the apparatus may further include:
a second icon display module, configured to: in response to a third operation on the second control, display a function icon corresponding to the second interaction function; and
the interaction function display module is further configured to: in response to a tap operation on the function icon, display the second interaction function corresponding to the second electronic device.

Optionally, the third operation includes: tapping the second control, or dragging the second control and releasing the second control when the distance between the second control and the first control is less than the preset threshold.

In an example, the application scenario determining module is further configured to determine, based on a preset correspondence between an application scenario and an interaction function, the at least one first interaction function corresponding to the application scenario.

In another example, the application scenario determining module is further configured to determine, based on the device information of the first electronic device and a preset correspondence between an application scenario and an interaction function, the first interaction function corresponding to the application scenario, where the device information of the first electronic device includes information about an interaction function supported by the first electronic device.

For example, the interaction function determining module is specifically configured to: determine, for each first interaction function, a first constraint condition and a second constraint condition that correspond to the first interaction function, where the first constraint condition is a condition that needs to be met by a transmitting end corresponding to the first interaction function, and the second constraint condition is a condition that needs to be met by a receiving end corresponding to the first interaction function; and determine, from the first interaction function based on the first constraint condition, the device information of the first electronic device, the second constraint condition, and the device information of the second electronic device, the second interaction function corresponding to the second electronic device.

According to a third aspect, an embodiment of this application provides an electronic device, including a memory, a processor, and a computer program that is stored in the memory and that can be run on the processor. When the processor executes the computer program, the electronic device is enabled to implement the device interaction method in any implementation of the first aspect.

According to a fourth aspect, an embodiment of this application provides a computer-readable storage medium. The computer-readable storage medium stores a computer program, and when the computer program is executed by a computer, the computer is enabled to implement the device interaction method in any implementation of the first aspect.

According to a fifth aspect, an embodiment of this application provides a computer program product. When the computer program product runs on an electronic device, the electronic device is enabled to perform the device interaction method in any implementation of the first aspect.

It may be understood that, for beneficial effects of the second aspect to the fifth aspect, refer to related descriptions in the first aspect. Details are not described herein again.

### BRIEF DESCRIPTION OF DRAWINGS

FIG. 1 is a diagram of a structure of a mobile phone to which a device interaction method is applicable according to an embodiment of this application;
FIG. 2 is a diagram of a software architecture to which a device interaction method is applicable according to an embodiment of this application;
FIG. 3 is a schematic flowchart of a device interaction method according to an embodiment of this application;
FIG. 4(a) and FIG. 4(b) are a first diagram of an application scenario according to an embodiment of this application;
FIG. 5(a) to FIG. 5(d) and FIG. 6 are second diagrams of application scenarios according to an embodiment of this application; and
FIG. 7 is a schematic flowchart of a device interaction method according to another embodiment of this application.

### DESCRIPTION OF EMBODIMENTS

It should be understood that, when used in this specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should be further understood that the term "and/or" used in this specification and the appended claims of this application indicates any combination and all possible combinations of one or more items listed in association, and includes the combinations.

As used in this specification and the appended claims of this application, based on the context, the term "if" may be interpreted as "when" or "once" or "in response to determining" or "in response to detecting". Likewise, the phrase "if it is determined that" or "if (a described condition or event) is detected" may be interpreted as a meaning of "once it is determined that" or "in response to determining" or "once (a described condition or event) is detected" or "in response to detecting (a described condition or event)" depending on the context.

In addition, in the descriptions of this specification and appended claims of this application, the terms "first", "second", "third", and the like are merely intended for the purpose of differentiated description, but shall not be understood as an indication or an implication of relative importance.

Reference to "an embodiment", "some embodiments", or the like described in this specification of this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In addition, "a plurality of" mentioned in embodiments of this application should be interpreted as two or more.

Steps mentioned in a device interaction method provided in embodiments of this application are merely used as an example. Not all steps are mandatory steps, or not content in each piece of information or each message is mandatory. In a use process, the step or the content may be added or removed based on a requirement. In different embodiments, mutual reference is made to a same step or steps or messages having a same function in embodiments of this application.

The service scenario described in embodiments of this application is intended to describe the technical solutions in embodiments of this application more clearly, and does not constitute a limitation on the technical solutions provided in embodiments of this application. Persons of ordinary skill in the art may learn that, with evolution of network architectures and emergence of new service scenarios, the technical solutions provided in embodiments of this application are also applicable to a similar technical problem.

With development of internet of things technologies, more devices may interact with each other, for example, screen casting, sound casting, multi-screen collaboration, and distributed cameras. When a device supports a plurality of interaction capabilities, a user needs to determine a currently required interaction capability, and trigger the interaction capability through an entry corresponding to the interaction capability. For example, when a tablet supports both multi-screen collaboration and a distributed camera, if the user determines that a mobile phone needs to perform multi-screen collaboration, the user may tap a tablet icon in a control center of the mobile phone to perform multi-screen collaboration with the tablet. If the user determines that the mobile phone needs to use the distributed camera, the user needs to open a camera application, and tap a button corresponding to the distributed camera to invoke a camera of the tablet. In other words, existing device interaction function entries are scattered, which affects user experience.

To resolve the foregoing problem, embodiments of this application provide a device interaction method, an electronic device, and a computer-readable storage medium. In the method, when a first electronic device needs to perform device interaction, the first electronic device may determine a current application scenario of the first electronic device, and determine at least one first interaction function corresponding to the application scenario. Then, the first electronic device may determine, based on the first interaction function, device information of the first electronic device, and device information of a second electronic device, a second interaction function corresponding to the second electronic device, where the second interaction function is one or more items in the first interaction function, and the second electronic device is associated with the first electronic device. Then, the first electronic device may display the second interaction function corresponding to the second electronic device, and in response to a first operation on a displayed second interaction function (which may be referred to as a third interaction function), may perform the second interaction function with the second electronic device.

That is, in embodiments of this application, the first electronic device may determine, based on the current application scenario, the first interaction function that may need to be performed by a user, determine, from the first interaction function based on the device information of the first electronic device and the device information of the second electronic device, the second interaction function supported by the second electronic device, and uniformly display, in an interface of the first electronic device, the second interaction function supported by the second electronic device. That is, the second interaction function is an interaction function that is supported by the second electronic device and that corresponds to the current application scenario of the first electronic device. The second interaction function may be all interaction functions supported by the second electronic device, or may be a part of all interaction functions supported by the second electronic device, to display, based on the current application scenario, the second interaction function that may need to be used by the user, so that the user quickly selects an interaction function based on the current application scenario, to improve device interaction efficiency. In addition, an operation entry for performing device interaction between the first electronic device and the second electronic device may be unified in the interface of the first electronic device, so that device interaction performed by the user is facilitated, and user experience is improved.

In embodiments of this application, the first electronic device may be a mobile phone, a tablet, a smart television, a vehicle-mounted device, a notebook computer, an ultra-mobile personal computer (ultra-mobile personal computer, UMPC), a netbook, a personal digital assistant (personal digital assistant, PDA), a desktop computer, the smart television, a smart large screen, or the like. The second electronic device may be a mobile phone, a tablet, a smart television, a vehicle-mounted device, a notebook computer, a UMPC, a netbook, a PDA, a desktop computer, the smart television, a smart large screen, a smart speaker, or the like. Specific types of the first electronic device and the second electronic device are not limited in embodiments of this application.

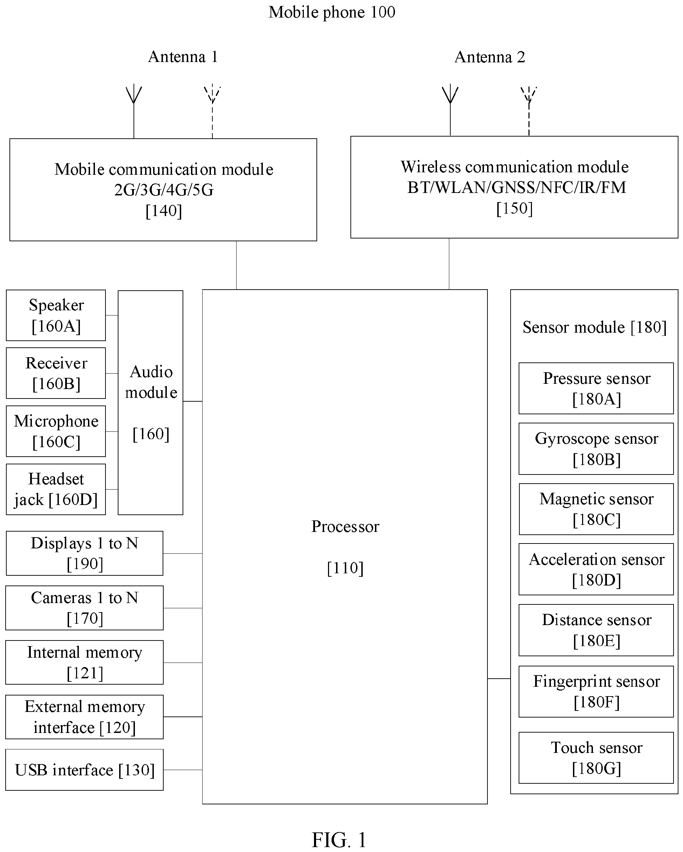

The following uses a mobile phone as an example to describe an electronic device (that is, the first electronic device or the second electronic device) in embodiments of this application. FIG. 1 is a diagram of a structure of a mobile phone 100. It may be understood that for another electronic device such as a tablet, a smart television, or a smart large screen, refer to the diagram of the structure of the mobile phone 100. Certainly, the another electronic device may include more or fewer components than those of the mobile phone 100, or some components may be combined, or some components may be split, or components are arranged in different manners.

The mobile phone 100 may include a processor 110, an external memory interface 120, an internal memory 121, a universal serial bus (universal serial bus, USB) interface 130, an antenna 1, an antenna 2, a mobile communication module 140, a wireless communication module 150, an audio module 160, a speaker 160A, a receiver 160B, a microphone 160C, a headset jack 160D, a sensor module 180, a camera 170, a display 190, and the like. The sensor module 180 may include a pressure sensor 180A, a gyroscope sensor 180B, a magnetic sensor 180C, an acceleration sensor 180D, a distance sensor 180E, a fingerprint sensor 180F, a touch sensor 180G, and the like.

It may be understood that the structure shown in this embodiment of this application does not constitute a specific limitation on the mobile phone 100. In some other embodiments of this application, the mobile phone 100 may include more or fewer components than those shown in the figure, or some components may be combined, or some components may be split, or components are arranged in different manners. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180G, the camera 170, and the like through different I2C bus interfaces. For example, the processor 110 may be coupled to the touch sensor 180G through the I2C interface, so that the processor 110 communicates with the touch sensor 180G through the I2C bus interface, to implement a touch function of the mobile phone 100.

The I2S interface may be configured to perform audio communication. In some embodiments, the processor 110 may include a plurality of groups of I2S buses. The processor 110 may be coupled to the audio module 160 through the I2S bus, to implement communication between the processor 110 and the audio module 160. In some embodiments, the audio module 160 may transmit an audio signal to the wireless communication module 150 through the I2S interface, to implement a function of answering a call through a Bluetooth headset.

The PCM interface may also be configured to perform audio communication, and sample, quantize, and encode an analog signal. In some embodiments, the audio module 160 may be coupled to the wireless communication module 150 through the PCM bus interface. In some embodiments, the audio module 160 may also transmit an audio signal to the wireless communication module 150 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 150. For example, the processor 110 communicates with a Bluetooth module in the wireless communication module 150 through the UART interface, to implement a Bluetooth function. In some embodiments, the audio module 160 may transmit an audio signal to the wireless communication module 150 through the UART interface, to implement a function of playing music through a Bluetooth headset.

The MIPI interface may be configured to connect the processor 110 to a peripheral component such as the display 190 or the camera 170. The MIPI interface includes a camera serial interface (camera serial interface, CSI), a display serial interface (display serial interface, DSI), and the like. In some embodiments, the processor 110 communicates with the camera 170 through the CSI interface, to implement a photographing function of the mobile phone 100. The processor 110 communicates with the display 190 through the DSI interface, to implement a display function of the mobile phone 100.

The GPIO interface may be configured by software. The GPIO interface may be configured as a control signal or a data signal. In some embodiments, the GPIO interface may be configured to connect the processor 110 to the camera 170, the display 190, the wireless communication module 150, the audio module 160, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the mobile phone 100, and may be further configured to perform data transmission between the mobile phone 100 and a peripheral device, or may be configured to connect to a headset for playing audio through the headset. Alternatively, the interface may be configured to connect to another electronic device, for example, an AR device.

It may be understood that an interface connection relationship between the modules shown in this embodiment of this application is merely an example for description, and does not constitute a limitation on the structure of the mobile phone 100. In some other embodiments of this application, the mobile phone 100 may alternatively use an interface connection manner different from that in the foregoing embodiment, or use a combination of a plurality of interface connection manners.

A wireless communication function of the mobile phone 100 may be implemented through the antenna 1, the antenna 2, the mobile communication module 140, the wireless communication module 150, the modem processor, the baseband processor, and the like.

The antenna 1 and the antenna 2 are configured to transmit and receive an electromagnetic wave signal. Each antenna in the mobile phone 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 140 may provide a solution, applied to the mobile phone 100, to wireless communication including 2G, 3G, 4G, 5G, and the like. The mobile communication module 140 may include at least one filter, a switch, a power amplifier, a low noise amplifier (low noise amplifier, LNA), and the like. The mobile communication module 140 may receive an electromagnetic wave through the antenna 1, perform processing such as filtering and amplification on the received electromagnetic wave, and transmit a processed electromagnetic wave to the modem processor for demodulation. The mobile communication module 140 may further amplify a signal modulated by the modem processor, and convert the signal into an electromagnetic wave for radiation through the antenna 1. In some embodiments, at least some functional modules of the mobile communication module 140 may be disposed in the processor 110. In some embodiments, at least some functional modules in the mobile communication module 140 and at least some modules in the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 160A, the receiver 160B, or the like), or displays an image or a video through the display 190. In some embodiments, the modem processor may be an independent device. In some other embodiments, the modem processor may be independent of the processor 110, and is disposed in a same device as the mobile communication module 140 or another functional module.

The wireless communication module 150 may provide a solution, applied to the mobile phone 100, to wireless communication including a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 150 may be one or more components integrating at least one communication processor module. The wireless communication module 150 receives an electromagnetic wave through the antenna 2, performs frequency modulation and filtering processing on the electromagnetic wave signal, and sends a processed signal to the processor 110. The wireless communication module 150 may further receive a to-be-sent signal from the processor 110, perform frequency modulation and amplification on the signal, and convert the signal into an electromagnetic wave through the antenna 2 for radiation.

In some embodiments, in the mobile phone 100, the antenna 1 and the mobile communication module 140 are coupled, and the antenna 2 and the wireless communication module 150 are coupled, so that the mobile phone 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division code division multiple access (time division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The mobile phone 100 implements a display function through the GPU, the display 190, the application processor, and the like. The GPU is a microprocessor for image processing, and is connected to the display 190 and the application processor. The GPU is configured to: perform mathematical and geometric computation, and render an image. The processor 110 may include one or more GPUs that execute program instructions to generate or change display information.

The display 190 is configured to display an image, a video, and the like. The display 190 includes a display panel. The display panel may be a liquid crystal display (liquid crystal display, LCD), an organic light emitting diode (organic light emitting diode, OLED), an active-matrix organic light emitting diode (active-matrix organic light emitting diode, AMOLED), a flexible light emitting diode (flexible light emitting diode, FLED), a mini-LED, a micro-LED, a micro-OLED, a quantum dot light emitting diode (quantum dot light emitting diodes, QLED), or the like. In some embodiments, the mobile phone 100 may include one or N displays 190, where N is a positive integer greater than 1.

The mobile phone 100 may implement a photographing function through the ISP, the camera 170, the video codec, the GPU, the display 190, the application processor, and the like.

The ISP is configured to process data fed back by the camera 170. For example, during shooting, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 170.

The camera 170 is configured to capture a static image or a video. An optical image of an object is generated through the lens, and is casted onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as an RGB format or a YUV format. In some embodiments, the mobile phone 100 may include one or N cameras 170, where N is a positive integer greater than 1.

The digital signal processor is configured to process a digital signal, and may further process another digital signal in addition to a digital image signal. For example, when the mobile phone 100 selects a frequency, the digital signal processor is configured to perform Fourier transform on energy of the frequency.

The video codec is configured to compress or decompress a digital video. The mobile phone 100 may support one or more video codecs. In this way, the mobile phone 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure such as a transmission mode between neurons in a human brain to perform rapid processing on input information, and can further perform continuous self-learning. Applications such as intelligent cognition of the mobile phone 100, for example, image recognition, facial recognition, speech recognition, and text understanding, may be implemented through the NPU.

The external memory interface 120 may be configured to connect to an external storage card, for example, a micro SD card, to extend a storage capability of the mobile phone 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data or a phone book) created in a process of using the mobile phone 100. In addition, the internal memory 121 may include a high-speed random access memory, and may further include a nonvolatile memory, for example, at least one magnetic disk storage device, a flash storage device, and a universal flash storage (universal flash storage, UFS). The processor 110 runs instructions stored in the internal memory 121 and/or instructions stored in the memory disposed in the processor, to perform various function applications and data processing of the mobile phone 100.

The mobile phone 100 may implement an audio function such as music playing or recording through the audio module 160, the speaker 160A, the receiver 160B, the microphone 160C, the headset jack 160D, the application processor, and the like.

The audio module 160 is configured to convert digital audio information into an analog audio signal for output, and is also configured to convert an analog audio input into a digital audio signal. The audio module 160 may be further configured to encode and decode an audio signal. In some embodiments, the audio module 160 may be disposed in the processor 110, or some functional modules in the audio module 160 are disposed in the processor 110.

The speaker 160A, also referred to as a "loudspeaker", is configured to convert an audio electrical signal into a sound signal. The mobile phone 100 may listen to music or answer a hands-free call through the speaker 160A.

The receiver 160B, also referred to as an "earpiece", is configured to convert an audio electrical signal into a sound signal. When a call is answered or voice information is received through the mobile phone 100, the receiver 160B may be put close to a human ear to listen to a voice.

The microphone 160C, also referred to as a "mike" or a "mic", is configured to convert a sound signal into an electrical signal. When making a call or sending voice information, a user may make a sound near the microphone 160C through the mouth of the user, to input a sound signal to the microphone 160C. At least one microphone 160C may be disposed in the mobile phone 100. In some other embodiments, two microphones 160C may be disposed in the mobile phone 100, and in addition to collecting a sound signal, a noise reduction function may be further implemented. In some other embodiments, three, four, or more microphones 160C may be alternatively disposed in the mobile phone 100, to collect a sound signal, implement noise reduction, identify a sound source, implement a directional recording function, and the like.

The headset jack 160D is configured to connect to a wired headset. The headset jack 160D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal and may convert the pressure signal into an electrical signal. In some embodiments, the pressure sensor 180A may be disposed on the display 190. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The mobile phone 100 determines force strength based on a change of the capacitance. When a touch operation is performed on the display 190, the mobile phone 100 detects strength of the touch operation based on the pressure sensor 180A. The mobile phone 100 may also calculate a touch position based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on an application icon "Messaging", an instruction for viewing an SMS message is executed. When a touch operation whose touch operation intensity is greater than or equal to the first pressure threshold is performed on the application icon "Messaging", an instruction for creating a new SMS message is executed.

The gyroscope sensor 180B may be configured to determine a motion posture of the mobile phone 100. In some embodiments, an angular velocity of the mobile phone 100 around three axes (namely, axes x, y, and z) may be determined through the gyroscope sensor 180B. The gyroscope sensor 180B may be configured to implement image stabilization during photographing. For example, when a shutter is pressed, the gyroscope sensor 180B detects an angle at which the mobile phone 100 jitters, obtains, through calculation based on the angle, a distance for which a lens module needs to compensate, and allows a lens to cancel the jitter of the mobile phone 100 through reverse motion, to implement image stabilization. The gyroscope sensor 180B may be further used for navigation and motion-controlled gaming scenarios.

The magnetic sensor 180C includes a Hall sensor. The mobile phone 100 may detect opening and closing of a flip cover through the magnetic sensor 180C. In some embodiments, when the mobile phone 100 is a flip phone, the mobile phone 100 may detect opening and closing of a flip cover based on the magnetic sensor 180C. Further, a feature such as automatic unlocking of the flip cover is set based on a detected opening or closing state of the leather case or a detected opening or closing state of the flip cover.

The acceleration sensor 180D may detect magnitude of accelerations in various directions (usually on three axes) of the mobile phone 100. When the mobile phone 100 is static, a value and a direction of gravity may be detected. The acceleration sensor 180D may be further configured to identify a posture of the electronic device, and is used in an application such as switching between a landscape mode and a portrait mode or a pedometer.

The distance sensor 180E is configured to measure a distance. The mobile phone 100 may measure a distance through infrared or laser. In some embodiments, in a photographing scenario, the mobile phone 100 may measure a distance through the distance sensor 180E, to implement quick focusing.

The fingerprint sensor 180F is configured to collect a fingerprint. The mobile phone 100 may use a feature of the collected fingerprint to implement fingerprint-based unlocking, application lock access, fingerprint-based photographing, fingerprint-based call answering, and the like.

The touch sensor 180G is also referred to as a "touch control device". The touch sensor 180G may be disposed on the display 190, and the touch sensor 180G and the display 190 form a touchscreen. The touch sensor 180G is configured to detect a touch operation performed on or near the touch sensor 180G. The touch sensor may transfer the detected touch operation to the application processor to determine a type of the touch event. A visual output related to the touch operation may be provided through the display 190. In some other embodiments, the touch sensor 180G may alternatively be disposed on a surface of the mobile phone 100 at a position different from a position of the display 190.

A layered architecture, an event-driven architecture, a micro-core architecture, a microservice architecture, or a cloud architecture may be used for a software system of the mobile phone 100. For example, an Android operating system (Operating System, OS), a Harmony operating system (Harmony OS), an iOS, or the like with a layered architecture may be used for the software system of the mobile phone 100. In embodiments of this application, an Android system with the layered architecture is used as an example to describe a software structure of the mobile phone 100.

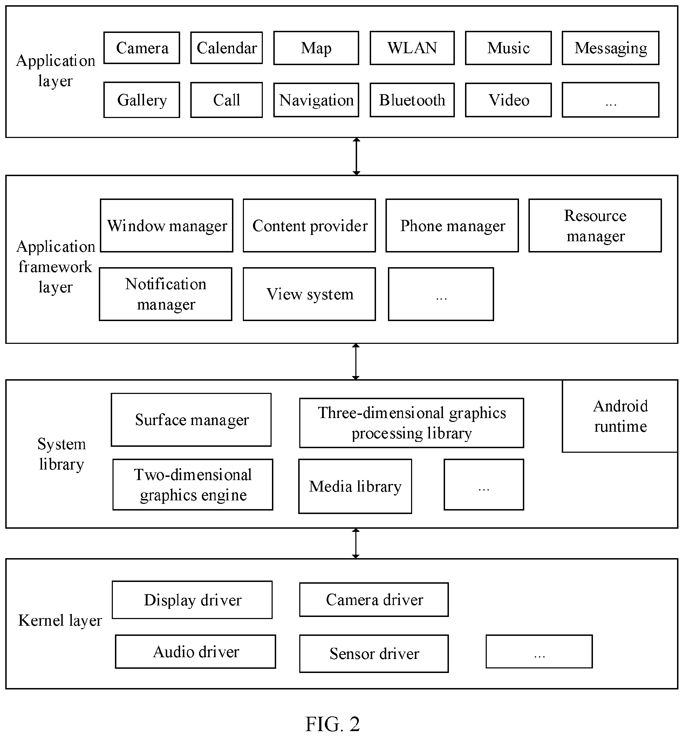

FIG. 2 is a block diagram of a software structure of a mobile phone 100 according to an embodiment of this application.

Software is divided into several layers in a layered architecture, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the mobile phone 100, for example, management of a call status (including answering, hanging up, or the like).

The resource manager provides various resources for an application such as a localized character string, an icon, a picture, a layout file, and a video file.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, an announcement is given, an electronic device vibrates, or an indicator light blinks.

The Android runtime includes a kernel library and a virtual machine. The Android runtime is responsible for scheduling and managing an Android system.

The core library includes two parts. One of the parts is a performance function that needs to be invoked in the Java language, and the other part is a core library of Android.

The application layer and the application framework layer run on the virtual machine. The virtual machine executes Java files of the application layer and the application framework layer as binary files. The virtual machine is configured to implement functions such as object life cycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes in detail the device interaction method provided in embodiments of this application with reference to the accompanying drawings and a specific application scenario.

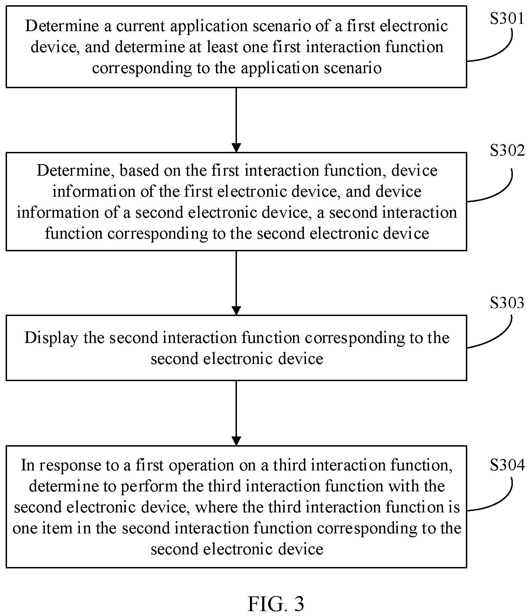

FIG. 3 is a schematic flowchart of a device interaction method according to an embodiment of this application. The method may be applied to a first electronic device. The first electronic device may be any electronic device such as a mobile phone, a tablet, a smart television, a vehicle-mounted device, a notebook computer, or a smart large screen. As shown in FIG. 3, the method may include the following steps.

S301: Determine a current application scenario of the first electronic device, and determine at least one first interaction function corresponding to the application scenario.

S302: Determine, based on the first interaction function, device information of the first electronic device, and device information of a second electronic device, a second interaction function corresponding to the second electronic device, where the second interaction function is one or more items in the first interaction function, and the second electronic device is associated with the first electronic device.

S303: Display the second interaction function corresponding to the second electronic device.

S304: In response to a first operation on a third interaction function, determine to perform the third interaction function with the second electronic device, where the third interaction function is one item in the second interaction function corresponding to the second electronic device.

In this embodiment of this application, when the first electronic device needs to perform interaction, the first electronic device may determine, based on the current application scenario of the first electronic device, the first interaction function that may need to be performed by a user, determine, from the first interaction function based on the device information of the first electronic device and the device information of the second electronic device, the second interaction function supported by the second electronic device, and uniformly display, in an interface of the first electronic device, the second interaction function supported by the second electronic device. That is, the second interaction function is an interaction function that is supported by the second electronic device and that corresponds to the current application scenario of the first electronic device. The second interaction function may be all interaction functions supported by the second electronic device, or may be a part of all interaction functions supported by the second electronic device, to display, based on the current application scenario, the second interaction function that may need to be used by the user, so that the user quickly selects an interaction function based on the current application scenario, to improve device interaction efficiency. In addition, the interface of the first electronic device is used as a unified entry for interaction between the first electronic device and the second electronic device, so that device interaction performed by the user is facilitated, and user experience is improved.

For example, the first electronic device may determine, based on whether a preset operation is detected, whether the first electronic device needs to perform interaction. That is, when detecting the preset operation, the first electronic device determines that device interaction needs to be performed. In this case, the first electronic device may determine the current application scenario of the first electronic device, and determine the first interaction function corresponding to the application scenario, to determine, based on the first interaction function, the second interaction function supported by the second electronic device.

In a possible implementation, the preset operation may be an operation of enabling a preset area of the first electronic device to be in touch with a preset area of the second electronic device. For example, the preset area may be an area in which an NFC chip is located (referred to as an NFC area below). To be specific, when the first electronic device reads NFC information of the second electronic device through an NFC module of the first electronic device, the first electronic device may determine that device interaction needs to be performed. In this case, the first electronic device may determine the current application scenario of the first electronic device, and determine the first interaction function corresponding to the application scenario, to determine, based on the first interaction function, the second interaction function corresponding to the second electronic device, and display the second interaction function in the interface of the first electronic device for the user to select an interaction function.

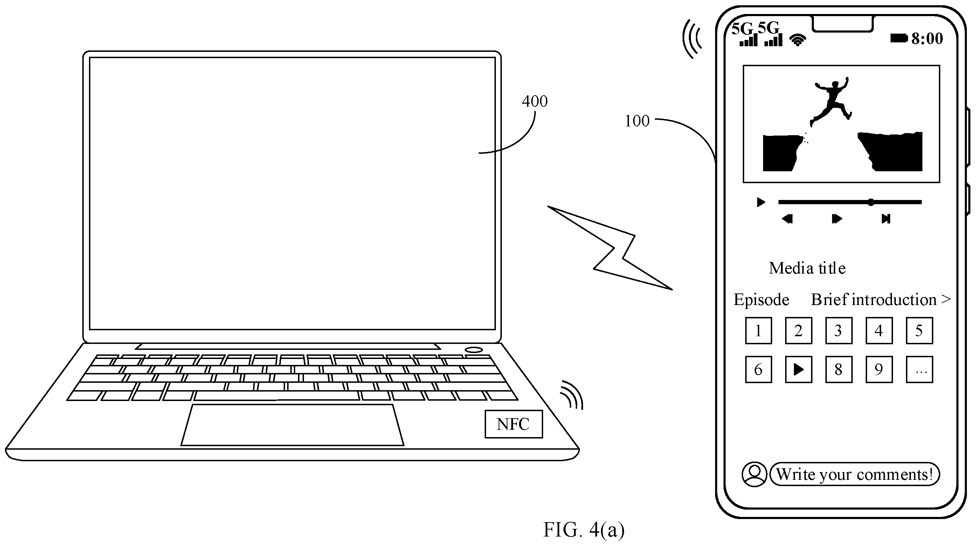

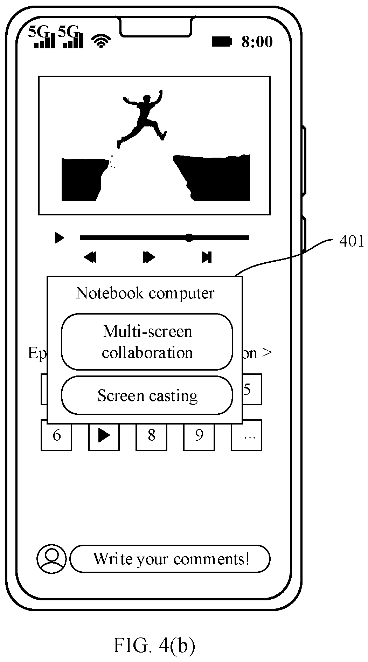

FIG. 4(a) and FIG. 4(b) are a first diagram of an application scenario according to an embodiment of this application. In the application scenario, an example in which a first electronic device is a mobile phone 100 and a second electronic device is a notebook computer 400 is used for description. An NFC chip is disposed in the mobile phone 100, and an NFC chip is also disposed in the notebook computer 400. The mobile phone 100 may be connected to the notebook computer 400 by using a communication network.

As shown in FIG. 4(a), when the mobile phone 100 displays an application interface (for example, a video playing interface), if a user needs to trigger the mobile phone 100 to perform device interaction with the notebook computer 400, the user may enable an NFC area in the mobile phone 100 to be in touch with an NFC area in the notebook computer 400. When the mobile phone 100 reads NFC information in the notebook computer 400 through an NFC module of the mobile phone 100, the mobile phone 100 determines that the mobile phone 100 needs to perform device interaction with the notebook computer 400. In this case, the mobile phone 100 may obtain a current application scenario of the mobile phone 100, and determine a first interaction function corresponding to the application scenario. It is assumed that the application scenario is a video scenario, and the first interaction function includes multi-screen collaboration, screen casting, sound casting, and application relay. Then, the mobile phone 100 may determine, from the first interaction function based on device information of the mobile phone 100 and device information of the notebook computer 400, a second interaction function supported by the notebook computer 400. It is assumed that the second interaction function includes the multi-screen collaboration and the screen casting. The mobile phone 100 may display, on a screen of the mobile phone 100, the second interaction function corresponding to the notebook computer 400. For example, as shown in FIG. 4(b), the mobile phone 100 may display a prompt window 401, and a multi-screen collaboration button and a screen casting button may be displayed in the prompt window 401. The user may tap the multi-screen collaboration button to perform multi-screen collaboration between the mobile phone 100 and the notebook computer 400, or may tap the screen casting button to cast content displayed in the mobile phone 100 onto the notebook computer 400 for display.

In another possible implementation, the preset operation may be an operation of entering an interface A of the first electronic device. The interface A may display a control corresponding to a device associated with the first electronic device, or may display a control corresponding to the first electronic device and a control corresponding to a device associated with the first electronic device. The device associated with the first electronic device may be an electronic device that is located in a same network (for example, a wireless fidelity (wireless fidelity, Wi-Fi) network) as the first electronic device, or may be an electronic device that logs in to a same account as the first electronic device, or may be an electronic device that logs in to an account that belongs to a same group as the first electronic device (for example, an account that belongs to a same family group), or may be an electronic device that is connected to the first electronic device through Bluetooth, a Wi-Fi direct connection, or the like. The control corresponding to the device may be a device icon, a name, and/or the like. In this case, the second electronic device may include all devices associated with the first electronic device, or may be a device associated with the first electronic device.

It should be noted that a layout of controls in the interface A is not limited in this embodiment of this application. For example, the control A corresponding to the first electronic device may be set at a position (for example, a center) in the interface A, and a control B corresponding to each associated device encircles around the control A at an equal distance. For example, the control A corresponding to the first electronic device may be set at a position in the interface A, and a control corresponding to each associated device is arranged based on a distance between the associated device and the first electronic device. For example, when a distance between an associated device and the first electronic device is smaller, a control corresponding to the associated device is closer to a control corresponding to the first electronic device; and when a distance between an associated device and the first electronic device is larger, a control corresponding to the associated device is farther from the control corresponding to the first electronic device.

Optionally, the user may enter the interface A by using a control center, or may enter the interface A by using a leftmost screen, a notification bar, or the like. In other words, a specific manner of entering the interface A is not limited in this embodiment of this application. The following uses an example in which the interface A is entered by using the control center for description.

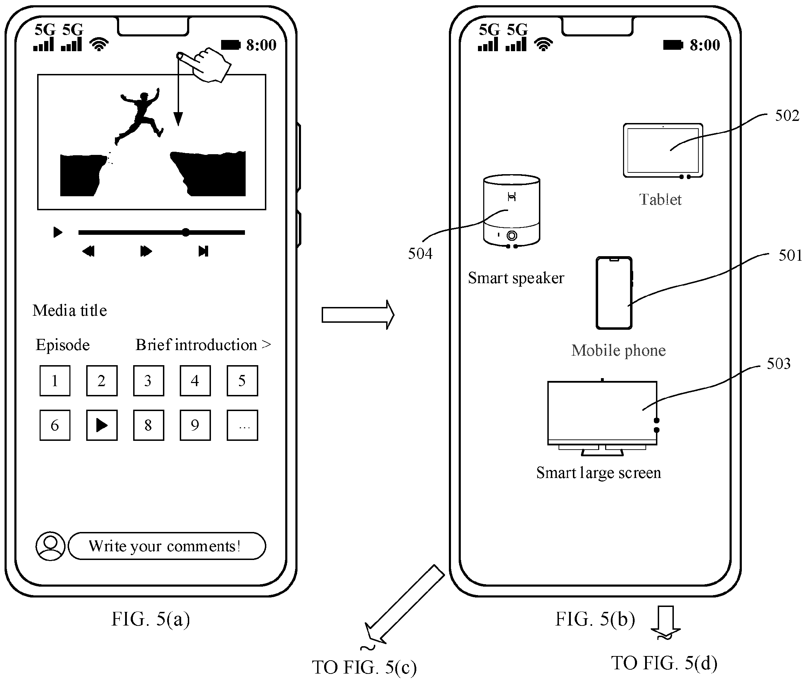

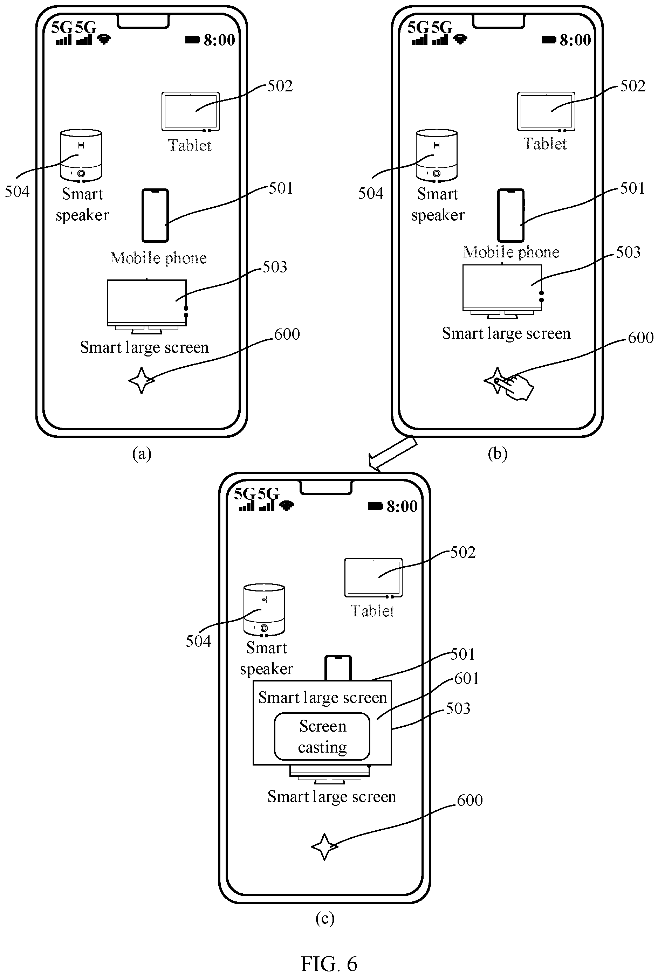

FIG. 5(a) to FIG. 5(d) and FIG. 6 are second diagrams of application scenarios according to an embodiment of this application. In the application scenarios, an example in which a first electronic device is a mobile phone 100 and a control is a device icon is used for description.

As shown in FIG. 5(a), when the mobile phone 100 displays an application interface (for example, a video playing interface), if a user needs to trigger the mobile phone 100 to perform device interaction with an electronic device, the user may enter an interface A by using a control center. For example, the user may perform an operation of sliding down from the top on a screen. After detecting the operation, the mobile phone 100 may obtain device information of a device associated with the mobile phone 100, and display the interface A on the mobile phone 100. It is assumed that devices associated with the mobile phone 100 include a tablet, a smart large screen, and a smart speaker. As shown in FIG. 5(b), the interface A may display a device icon 501 of the mobile phone 100, a device icon 502 of the tablet, a device icon 503 of the smart large screen, and a device icon 504 of the smart speaker. After entering the interface A, the mobile phone 100 may determine a current application scenario of the mobile phone 100, and may determine a first interaction function corresponding to the application scenario. It is assumed that the current application scenario of the mobile phone 100 is a video scenario, and a first interaction function corresponding to the video scenario includes multi-screen collaboration, screen casting, sound casting, and application relay.

Then, the mobile phone 100 may determine, from the first interaction function based on device information of the mobile phone 100 and device information of the tablet, a second interaction function corresponding to the tablet. It is assumed that the second interaction function corresponding to the tablet includes the multi-screen collaboration and the application relay. Similarly, the mobile phone 100 may determine, from the first interaction function based on the device information of the mobile phone 100 and device information of the smart large screen, a second interaction function corresponding to the smart large screen. It is assumed that the second interaction function corresponding to the smart large screen is screen casting. Similarly, the mobile phone 100 may determine, from the first interaction function based on the device information of the mobile phone 100 and device information of the smart speaker, a second interaction function corresponding to the smart speaker. It is assumed that the second interaction function corresponding to the smart speaker is sound casting.

In an example, after determining the second interaction function corresponding to each associated device, the mobile phone 100 may directly display, in the interface A, the second interaction function corresponding to each associated device. For example, the mobile phone 100 may display the second interaction function by using a prompt window or a card.

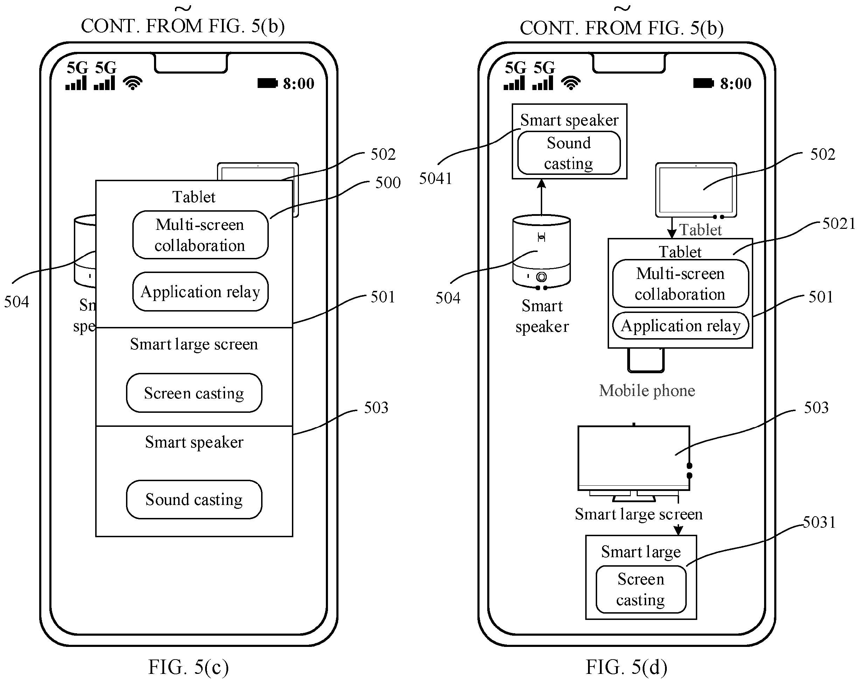

For example, as shown in FIG. 5(c), the mobile phone 100 may pop up a prompt window 500 in the interface A, and may display, in the prompt window 500, the second interaction function corresponding to each associated device. To be specific, the mobile phone 100 may display, in the prompt window 500, the second interaction function "multi-screen collaboration" and "application relay" corresponding to the tablet, the second interaction function "screen casting" corresponding to the smart large screen, and the second interaction function "sound casting" corresponding to the smart speaker.

For example, as shown in FIG. 5(d), the mobile phone 100 may display, in the interface A, a card corresponding to each associated device, and may display, in the card corresponding to each associated device, the second interaction function corresponding to the associated device. To be specific, the mobile phone 100 may display, in the interface A, a card 5021 corresponding to the tablet, a card 5031 corresponding to the smart large screen, and a card 5041 corresponding to the smart speaker; and may display, in the card 5021, the second interaction function "multi-screen collaboration" and "application relay" corresponding to the tablet, display, in the card 5031, the second interaction function "screen casting" corresponding to the smart large screen, and display, in the card 5041, the second interaction function "sound casting" corresponding to the smart speaker.

It should be noted that a display manner, a display sequence, and the like of the second interaction function in the prompt window are not limited in this embodiment of this application, and may be specifically determined based on an actual situation. Similarly, a display position of each card is not limited in this embodiment of this application, and any card may be displayed at any position of the interface A. To improve user experience, as shown in FIG. 5(d), a card corresponding to each associated device may be displayed near a device icon of the associated device.

In another example, as shown in (a) in FIG. 6, after determining the second interaction function corresponding to each associated device, the mobile phone 100 may display a function icon 600 in the interface A. When detecting a tap operation on the function icon 600, the mobile phone 100 may display, in the interface A, the second interaction function corresponding to each associated device. For example, the mobile phone 100 may display, by using the prompt window shown in FIG. 5(c), the second interaction function corresponding to each associated device, or may display, by using the card shown in FIG. 5(d), the second interaction function corresponding to each associated device.

It should be noted that, the foregoing descriptions in which the function icon 600 is in a four-leaf clover shape are merely used as an example for explanation, and should not be construed as a limitation on this embodiment of this application. A specific shape of the function icon 600 is not limited in this embodiment of this application.

In another example, after determining the second interaction function corresponding to each associated device, when detecting an operation 1 on a device icon, the mobile phone 100 may display, in the interface A, a second interaction function of an associated device corresponding to the device icon. Alternatively, when detecting an operation 1 on a device icon, the mobile phone 100 may display the function icon 600 in the interface A. When detecting a tap operation on the function icon 600, the mobile phone 100 may display, in the interface A, the second interaction function corresponding to the associated device. To be specific, after determining the second interaction function corresponding to each associated device, the mobile phone 100 does not display, in the interface A, the second interaction function corresponding to each associated device, but obtains an operation 1 performed by the user, to determine, based on the operation 1, an associated device selected by the user for interaction, and displays, in the interface A, only a second interaction function corresponding to the associated device, so that the user selects a second interaction function to perform device interaction.

The operation 1 may be a tap operation, or may be an operation of dragging the device icon to a position near the device icon of the mobile phone 100. It should be understood that the near means that a distance between two device icons is less than a preset threshold, and the preset threshold may be specifically determined based on an actual situation. In addition, a drag track of a drag operation is not specifically limited in this embodiment of this application, provided that the device icon is finally located near the device icon of the mobile phone 100.

For example, as shown in (b) in FIG. 6, after determining the second interaction function corresponding to each associated device, when the mobile phone 100 detects that the device icon 503 of the smart large screen is dragged to a position near the device icon 501 of the mobile phone, the mobile phone 100 may display the function icon 600 in the interface A. When detecting a tap operation on the function icon 600, as shown in (c) in FIG. 6, the mobile phone 100 may display, in the interface A, the second interaction function corresponding to the smart large screen. For example, the mobile phone 100 may pop up a card or a prompt window 601 (the prompt window is used as an example for description in FIG. 6) in the interface A, and may display, in the prompt window 601, the second interaction function "screen casting" corresponding to the smart large screen.

In conclusion, the mobile phone 100 may determine all devices associated with the mobile phone 100 as second electronic devices, determine the current application scenario of the mobile phone 100 based on the preset operation performed by the user, and determine the first interaction function corresponding to the application scenario, to determine, based on the first interaction function, the second interaction function corresponding to each second electronic device. Then, the mobile phone 100 may directly display, in the interface A, the second interaction function corresponding to each second electronic device, or display, based on the tap operation performed by the user on the function icon, the second interaction function corresponding to each second electronic device. Therefore, the user may select the second interaction function in the interface A, to determine the second electronic device that finally interacts with the mobile phone 100. The mobile phone 100 may perform related device interaction with the determined second electronic device based on the second interaction function selected by the user. Alternatively, the mobile phone 100 may display, in the interface A based on an operation 1 performed by the user on a device icon of a second electronic device, a second interaction function corresponding to the second electronic device, to perform device interaction with the second electronic device based on selection performed by the user on the second interaction function corresponding to the second electronic device.

In another possible implementation, the preset operation may alternatively be an operation of tapping a control corresponding to an associated device (that is, the second electronic device) in the interface A; or an operation of dragging a control corresponding to the second electronic device in the interface A to a position near a control corresponding to the first electronic device.

To be specific, when the user needs to perform interaction between the first electronic device and the second electronic device, the user may enter the interface A by using the control center, and tap an associated device in the interface A, or drag a device icon of the associated device to a position near the device icon of the first electronic device. When detecting a tap operation or a drag operation on the associated device, the first electronic device may determine that the associated device is the second electronic device, and determine that the user needs to perform device interaction between the first electronic device and the second electronic device. In this case, the first electronic device may determine the current application scenario of the first electronic device, and determine the first interaction function corresponding to the application scenario, to determine, based on the first interaction function corresponding to the application scenario, the second interaction function corresponding to the second electronic device.

After determining the second interaction function corresponding to the second electronic device, the first electronic device may directly display, in the interface A, the second interaction function corresponding to the second electronic device, so that the user may perform device interaction between the first electronic device and the second electronic device by selecting the second interaction function in the interface A. Alternatively, the first electronic device may display the function icon in the interface A, and when detecting the tap operation on the function icon, display, in the interface A, the second interaction function corresponding to the second electronic device.

The following describes in detail a process in which the first electronic device determines the first interaction function and a process in which the first electronic device determines the second interaction function based on the first interaction function.

For example, the first electronic device may determine the current application scenario of the first electronic device based on a running status of the first electronic device. For example, when the first electronic device runs a video application in the foreground, the first electronic device may determine that the current application scenario is a video scenario. When the first electronic device runs a music application in the foreground and is in a music playing state, the first electronic device may determine that the current application scenario is an audio scenario. When the first electronic device runs a video call application in the foreground, the first electronic device may determine that the current application scenario is a video call scenario. When the first electronic device runs a document editing application in the foreground, for example, word or wps, the first electronic device may determine that the current application scenario is an office scenario. When the first electronic device runs a camera application in the foreground, the first electronic device may determine that the current application scenario is a photographing scenario. When the first electronic device displays a home screen, that is, when the first electronic device runs no application in the foreground, the first electronic device may determine that the current application scenario is a default scenario.

The first interaction function may include but is not limited to one or more of interaction functions such as multi-screen collaboration, screen casting, sound casting, application relay, and a distributed camera. It should be understood that the application relay means that one electronic device may relay an application running on another electronic device, and the relayed application may be a video application, a music application, a document editing application, a smooth connection application (for example, a video call application), or the like. The distributed camera means that an electronic device may invoke a camera of another electronic device to perform photographing.

In a possible implementation, the first electronic device may determine, based on a preset correspondence between an application scenario and an interaction function, the first interaction function corresponding to the current application scenario of the first electronic device. The preset correspondence may be stored in the first electronic device, or may be stored in another device that is communicatively connected to the first electronic device, for example, may be stored in a cloud server. The preset correspondence may be set by the first electronic device by default, or may be set by the user in a customized manner. This is not limited in this embodiment of this application.

For example, Table 1 shows an example of the preset correspondence between the application scenario and the interaction function. Therefore, after determining the current application scenario of the first electronic device, the first electronic device may determine, by searching Table 1, the first interaction function corresponding to the application scenario.

**Table 1**

| Scenario name | Interaction function |
|---|---|
| Video scenario | Multi-screen collaboration, screen casting, sound casting, and application relay |
| Audio scenario | Sound casting and application relay |
| Call scenario | Application relay |
| Office scenario | Multi-screen collaboration and application relay |
| Photographing scenario | Distributed camera |
| Default scenario | Multi-screen collaboration, screen casting, sound casting, application relay, and distributed camera |

For example, when the first electronic device determines that the current application scenario is the video scenario, the first electronic device may determine that the first interaction function corresponding to the application scenario includes multi-screen collaboration, screen casting, sound casting, and application relay. For example, when the first electronic device determines that the current application scenario is the photographing scenario, the first electronic device may determine that the first interaction function corresponding to the application scenario is the distributed camera; and so on.

Optionally, after determining the first interaction function corresponding to the application scenario, the first electronic device may determine a constraint condition A and a constraint condition B that correspond to each first interaction function. The constraint condition A may be a condition that needs to be met by a transmitting end corresponding to the first interaction function, and the constraint condition B may be a condition that needs to be met by a receiving end corresponding to the first interaction function. Therefore, the first electronic device may determine, from the first interaction function based on the constraint condition A, the constraint condition B, the device information of the first electronic device, and the device information of the second electronic device, the second interaction function corresponding to the second electronic device. The second interaction function may be one or more items in the first interaction function.

It may be understood that the constraint condition A and the constraint condition B that correspond to each first interaction function may be specifically set by skilled persons based on an actual situation. This is not specifically limited in this embodiment of this application. Device information mainly includes a basic attribute, a service capability, and the like of a device. For example, the device information may include a device ID, a device type, a device name, an installed application, information indicating whether the screen casting is supported, a device type of a receiving end and/or a device type of a transmitting end supported by the screen casting, information indicating whether the sound casting is supported, a device type of a receiving end and/or a device type of a transmitting end supported by the sound casting, information indicating whether the multi-screen collaboration is supported, a device type of a receiving end and/or a device type of a transmitting end supported by the multi-screen collaboration, information indicating whether the application relay is supported, a device type of a receiving end and/or a device type of a transmitting end supported by the application relay, information indicating whether the distributed camera is supported, a device type of a receiving end and/or a device type of a transmitting end supported by the distributed camera, and the like.

For example, Table 2 shows an example of the constraint condition A and the constraint condition B that correspond to each first interaction function. Therefore, after determining the first interaction function corresponding to the application scenario, the first electronic device may obtain the device information of the first electronic device and the device information of the second electronic device, and may determine, based on the device information of the first electronic device, the device information of the second electronic device, and Table 2, the second interaction function corresponding to the second electronic device.

**Table 2**

| Interaction function | Constraint condition A | Constraint condition B |
|---|---|---|
| Multi-screen collaboration | 1. A device type of a transmitting end is a mobile phone. | 1. A device type of a receiving end is a tablet or a notebook computer. |
| | 2. The transmitting end supports the multi-screen collaboration. | 2. The receiving end supports the multi-screen collaboration. |
| Screen casting | 1. The device type of the transmitting end is the mobile phone or the tablet. | 1. The device type of the receiving end is the tablet, the notebook computer, or a smart large screen. |
| | 2. The transmitting end supports the screen casting. | 2. The receiving end supports the screen casting. |
| Sound casting | 1. The device type of the transmitting end is the mobile phone or the tablet. | 1. The device type of the receiving end is a smart speaker. |
| | | 2. The receiving end supports the sound casting. |
| | 2. The transmitting end supports the sound casting. | |
| Application relay | 1. The device type of the transmitting end is the mobile phone, the tablet, or the notebook computer. | 1. The device type of the receiving end is the mobile phone, the tablet, or the notebook computer. |
| | | 2. The receiving end supports the application relay. |
| | 2. The transmitting end supports the application relay. | |
| Distributed camera | 1. The device type of the transmitting end is the mobile phone or the tablet. | 1. The device type of the receiving end is the mobile phone or the tablet. |
| | | 2. The receiving end supports the application relay. |
| | 2. The transmitting end supports the application relay. | |

Optionally, for each first interaction function, the first electronic device may determine, based on Table 2, the device information of the first electronic device, and the device information of the second electronic device, whether the first interaction function is an interaction function supported by the second electronic device, that is, determine, based on the device information of the first electronic device, whether the first electronic device meets the constraint condition A corresponding to the first interaction function, and determine, based on the device information of the second electronic device, whether the second electronic device meets the constraint condition B corresponding to the first interaction function. When the first electronic device meets the constraint condition A corresponding to the first interaction function, and the second electronic device meets the constraint condition B corresponding to the first interaction function, the first electronic device may determine that the first interaction function is the interaction function supported by the second electronic device. In this case, the first electronic device may determine the first interaction function as the second interaction function corresponding to the second electronic device.

For example, when the first electronic device is the mobile phone, and the second electronic device is the tablet, if it is determined that the current application scenario of the mobile phone is the video scenario, the mobile phone may determine, based on Table 1, that the first interaction function corresponding to the video scenario includes the multi-screen collaboration, the screen casting, the sound casting, and the application relay.

For the multi-screen collaboration, it can be learned from Table 2 that the transmitting end of the multi-screen collaboration includes the mobile phone, and the receiving end includes the tablet. In this case, if the mobile phone determines, based on the device information of the mobile phone, that the mobile phone supports the multi-screen collaboration, and the mobile phone determines, based on the device information of the tablet, that the tablet supports the multi-screen collaboration, the mobile phone may determine that the multi-screen collaboration is the second interaction function corresponding to the tablet.

For the screen casting, it can be learned from Table 2 that the transmitting end of the screen casting includes the mobile phone, and the receiving end includes the tablet. In this case, if the mobile phone determines, based on the device information of the mobile phone, that the mobile phone supports the screen casting, and the mobile phone determines, based on the device information of the tablet, that the tablet supports the screen casting, the mobile phone may determine that the screen casting is the second interaction function corresponding to the tablet.

For the sound casting, it can be learned from Table 2 that the transmitting end of the sound casting includes the mobile phone, but the receiving end does not include the tablet. Therefore, the mobile phone may determine that the sound casting is not the second interaction function corresponding to the tablet.

For the application relay, it can be learned from Table 2 that the transmitting end of the application relay includes the mobile phone, and the receiving end includes the tablet. In this case, if the mobile phone determines, based on the device information of the mobile phone, that the mobile phone supports the application relay, and the mobile phone determines, based on the device information of the tablet, that the tablet supports the application relay, the mobile phone may determine that the application relay is the second interaction function corresponding to the tablet.

Therefore, in the video scenario, the mobile phone may determine that the second interaction function corresponding to the tablet includes the multi-screen collaboration, the screen casting, and the application relay.

In another possible implementation, the first electronic device may determine, based on the device information of the first electronic device and a preset correspondence between an application scenario and an interaction function, the first interaction function corresponding to the current application scenario of the first electronic device. For example, the first electronic device may determine, based on the device information of the first electronic device, an interaction function supported by the first electronic device, and determine, based on the interaction function supported by the first electronic device and the preset correspondence, the first interaction function corresponding to the current application scenario of the first electronic device. That is, the first interaction function is an interaction function that corresponds to the current application scenario of the first electronic device and that is supported by the first electronic device.

For example, Table 3 shows an example of a first interaction function corresponding to each application scenario when the first electronic device is the mobile phone. Therefore, when the first electronic device is the mobile phone, after determining the current application scenario of the mobile phone, the mobile phone may determine, by searching Table 3, the first interaction function corresponding to the application scenario.

**Table 3**

| Scenario name | Interaction function |
|---|---|
| Video scenario | 011_phoneextend, 011_cast, 011_relay, 012_phoneextend, 012_cast, 012_relay, 09C_cast, and 00A_sound |
| Audio scenario | 00A_sound, 011_relay, and 012_relay |
| Call scenario | 011_relay and 012_relay |
| Office scenario | 011_phoneextend, 012_phoneextend, 011_relay, and 012_relay |
| Photographing scenario | 011_camera and 013_camera |
| Default scenario | 011_phoneextend, 012_phoneextend, 011_cast, 012_cast, 09C_cast, 011_relay, 012_relay, 00A_sound, 011_camera, and 013_camera |

011 indicates the tablet, 012 indicates the notebook computer, 013 indicates the mobile phone, 09C indicates the smart large screen, 00A indicates the smart speaker, phoneextend indicates the multi-screen collaboration, cast indicates the screen casting, relay indicates the application relay, sound indicates the sound casting, and camera indicates the distributed camera. In other words, 011_phoneextend indicates the multi-screen collaboration in which the receiving end is the tablet, 011_cast indicates the screen casting in which the receiving end is the tablet, 011_relay indicates the application relay in which the receiving end is the tablet, and other indications are similar. Details are not described herein.

Similar to the foregoing descriptions, after determining the first interaction function corresponding to the application scenario, the first electronic device may determine the constraint condition A and the constraint condition B that correspond to each first interaction function. Therefore, the first electronic device may determine, from the first interaction function based on the constraint condition A, the constraint condition B, the device information of the first electronic device, and the device information of the second electronic device, the second interaction function corresponding to the second electronic device.

For example, Table 4 shows an example of a constraint condition A and a constraint condition B that correspond to each first interaction function. Therefore, after determining the first interaction function corresponding to the application scenario, the first electronic device may obtain the device information of the first electronic device and the device information of the second electronic device, and may determine, based on the device information of the first electronic device, the device information of the second electronic device, and Table 4, the second interaction function corresponding to the second electronic device.

**Table 4**

| Interaction function | Constraint condition A | Constraint condition B |
|---|---|---|
| 011_phoneextend | 1. A device type of a transmitting end is a mobile phone. | 1. A device type of a receiving end is a tablet. |
| | 2. The transmitting end supports multi-screen collaboration. | 2. The receiving end supports the multi-screen collaboration. |
| 011_cast | 1. The device type of the transmitting end is the mobile phone. | 1. The device type of the receiving end is the tablet. |
| | | 2. The receiving end supports the screen casting. |
| | 2. The transmitting end supports screen casting. | |
| 011_relay | 1. The device type of the transmitting end is the mobile phone. | 1. The device type of the receiving end is the tablet. |
| | | 2. The receiving end supports the application relay. |
| | 2. The transmitting end supports application relay. | |
| 012_phoneextend | 1. The device type of the transmitting end is the mobile phone. | 1. The device type of the receiving end is a notebook computer. |
| | | 2. The receiving end supports the multi-screen collaboration. |
| | 2. The transmitting end supports the multi-screen collaboration. | |
| 00A_sound | 1. The device type of the transmitting end is the mobile phone or the tablet. | 1. The device type of the receiving end is a smart speaker. |
| | | 2. The receiving end supports the sound casting. |
| | 2. The transmitting end supports sound casting. | |
| ... | ... | ... |
| 011_camera | 1. The device type of the transmitting end is the mobile phone. | 1. The device type of the receiving end is the tablet. |
| | 2. The transmitting end supports a distributed camera. | 2. The receiving end supports the distributed camera. |

It should be noted that, when a developer performs code development, each constraint condition A and each constraint condition B may be separately set as an independent atomic capability module, so that the atomic capability module can be reused in different application scenarios, to improve development efficiency.

For example, a constraint condition A corresponding to the transmitting end in 011_phoneextend may be set as an atomic capability module A1, a constraint condition B corresponding to the receiving end may be set as an atomic capability module B1, a constraint condition B corresponding to the receiving end in 012_phoneextend may be set as an atomic capability module B2, and so on.

When the first electronic device is the mobile phone and the second electronic device is the tablet, the mobile phone may determine, based on the atomic capability module A1 and the atomic capability module B1, whether the multi-screen collaboration is the second interaction function corresponding to the tablet. When the first electronic device is the mobile phone, and the second electronic device is the notebook computer, the mobile phone may determine, based on the atomic capability module A1 and the atomic capability module B2, whether the multi-screen collaboration is the second interaction function corresponding to the notebook computer, and so on.

Alternatively, when the developer performs code development, each sub-condition in the constraint condition A and each sub-condition in the constraint condition B may be separately set as an independent atomic capability module.

For example, a first item (that is, the device type of the transmitting end is the mobile phone) and a second item (that is, the transmitting end supports the multi-screen collaboration) in the constraint condition A corresponding to the transmitting end in 011_phoneextend may be respectively set as an atomic capability module A1 and an atomic capability module A2; a first item (that is, the device type of the receiving end is the tablet) and a second item (that is, the receiving end supports the multi-screen collaboration) in the constraint condition B corresponding to the receiving end may be respectively set as an atomic capability module B1 and an atomic capability module B2; a first item (that is, the device type of the receiving end is the notebook computer) in the constraint condition B corresponding to the receiving end in 012_phoneextend is set as an atomic capability module B3, and so on.

When the first electronic device is the mobile phone and the second electronic device is the tablet, the mobile phone may determine, based on the atomic capability module A1, the atomic capability module A2, the atomic capability module B1, and the atomic capability module B2, whether the multi-screen collaboration is the second interaction function corresponding to the tablet. When the first electronic device is the mobile phone and the second electronic device is the notebook computer, the mobile phone may determine, based on the atomic capability module A1, the atomic capability module A2, the atomic capability module B3, and the atomic capability module B2, whether the multi-screen collaboration is the second interaction function corresponding to the notebook computer, and so on.

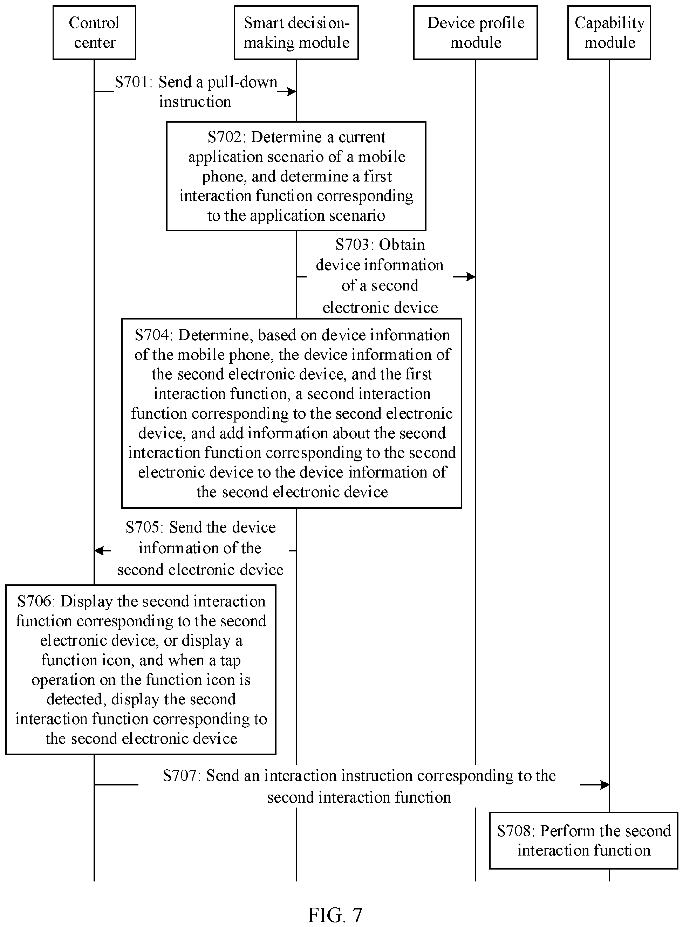

FIG. 7 is a schematic flowchart of a device interaction method according to another embodiment of this application. The method may be applied to a first electronic device (for example, a mobile phone). In the method, an example in which when it is detected that an interface A is entered by using a control center, it is determined that the mobile phone needs to perform device interaction is used. The mobile phone may include the control center, a smart decision-making module, a device profile module, and a capability module. As shown in FIG. 7, the method may include the following steps.

S701: When detecting that the control center is pulled down to enter the interface A, the control center sends a pull-down instruction to the smart decision-making module.

S702: After receiving the pull-down instruction, the smart decision-making module determines a current application scenario of the mobile phone, and determines a first interaction function corresponding to the application scenario.

S703: The smart decision-making module obtains device information of a second electronic device from the device profile module.

S704: The smart decision-making module determines, based on device information of the mobile phone, the device information of the second electronic device, and the first interaction function, a second interaction function corresponding to the second electronic device, and adds information about the second interaction function corresponding to the second electronic device to the device information of the second electronic device.

S705: The smart decision-making module sends the device information of the second electronic device to the control center, where the information about the second interaction function is added to the device information.

S706: After obtaining the device information of the second electronic device, the control center displays the second interaction function corresponding to the second electronic device, or displays a function icon, and when a tap operation on the function icon is detected, displays the second interaction function corresponding to the second electronic device.

S707: When detecting a tap operation on a second interaction function, the control center sends an interaction instruction corresponding to the second interaction function to the capability module.

S708: The capability module performs the second interaction function after receiving the interaction instruction corresponding to the second interaction function.

The interface A may be the interface shown in FIG. 5(b). Device information may be transferred in a json character string format. The device profile module may store device information of all devices associated with the mobile phone, or store device information of only one associated device (that is, the second electronic device). For example, the device information stored in the device profile module may be obtained from each associated device, or may be obtained from another storage apparatus that stores each associated device. It should be understood that time at which the device profile module obtains the device information of the associated device is not specifically limited in this embodiment of this application. For example, the device information of the associated device may be obtained when the mobile phone detects that the control center is pulled down to enter the interface A, or may be obtained at any other moment.

In an example, when determining that the mobile phone needs to perform device interaction, the smart decision-making module in the mobile phone may determine the current application scenario of the mobile phone based on a current running status of the mobile phone, and may determine, based on Table 1, the first interaction function corresponding to the application scenario.

It is assumed that the mobile phone runs a music application in the foreground, and the music application is in a music playing state. The smart decision-making module may determine that the current application scenario of the mobile phone is an audio scenario, and may determine, based on Table 1, that the first interaction function corresponding to the audio scenario includes sound casting and application relay.

Then, for each first interaction function, the smart decision-making may determine, based on Table 2, a constraint condition A and a constraint condition B that correspond to the first interaction function, obtain the device information of the mobile phone and the device information of each associated device, to determine, based on the device information of the mobile phone, the device information of each associated device, and the constraint condition A and the constraint condition B that correspond to the first interaction function, a second interaction function corresponding to each associated device, and add information about the second interaction function corresponding to each associated device to the device information of each associated device.

It is assumed that the devices associated with the mobile phone include a tablet, a smart large screen, and a smart speaker. A constraint condition A that corresponds to the sound casting and that is determined by the smart decision-making module based on Table 2 includes: (1) A device type of a transmitting end is the mobile phone or the tablet. (2) The transmitting end supports the sound casting. A constraint condition B corresponding to the sound casting includes: (1) A device type of a receiving end is a smart speaker. (2) The receiving end supports the sound casting. Similarly, a constraint condition A that corresponds to the application relay and that may be determined by the mobile phone based on Table 2 includes: (1) The device type of the transmitting end is the mobile phone, the tablet, or a notebook computer. (2) The transmitting end supports the application relay. The constraint condition B corresponding to the application relay includes: (1) The device type of the receiving end is the mobile phone, the tablet, or the notebook computer. (2) The receiving end supports the application relay.

It is assumed that the smart decision-making module determines, based on device information A of the tablet, that the tablet supports the application relay, and determines, based on device information B of the smart speaker, that the smart speaker supports the sound casting. In this case, the smart decision-making module may determine that a second interaction function corresponding to the tablet is the application relay, a second interaction function corresponding to the smart speaker is the sound casting, and a second interaction function corresponding to the smart large screen is empty, add information about the application relay corresponding to the tablet to the device information A of the tablet, and add information about the sound casting corresponding to the smart speaker to the device information B of the smart speaker. Then, the smart decision-making module may separately send, to the control center, the device information A to which the information about the application relay is added and the device information B to which the information about the sound casting is added.

After obtaining the device information A to which the information about the application relay is added and the device information B to which the information about the sound casting is added, the control center may directly display, by using a prompt window or a card, the second interaction function corresponding to the tablet and the second interaction function corresponding to the smart speaker, or when detecting an operation 1, may display, by using the prompt window or the card the second interaction function corresponding to the tablet or the second interaction function corresponding to the smart speaker.

Alternatively, after obtaining the device information A to which the information about the application relay is added and the device information B to which the information about the sound casting is added, the control center may display a function icon in an interface, and when detecting a tap operation performed by the user on the function icon, may display the second interaction function corresponding to the tablet and the second interaction function corresponding to the smart speaker. Alternatively, when the operation 1 is detected, the function icon is displayed in the interface, and when the tap operation on the function icon is detected, the second interaction function corresponding to the tablet or the second interaction function corresponding to the smart speaker may be displayed.

The operation 1 is an operation of tapping a control corresponding to the tablet in the interface, or an operation of dragging, in the interface, the control corresponding to the tablet to a position near a control corresponding to the mobile phone, or an operation of tapping a control corresponding to the smart speaker in the interface, or an operation of dragging, in the interface, the control corresponding to the smart speaker to a position near the control corresponding to the mobile phone. For example, when the operation 1 is for the control corresponding to the tablet, the function icon displayed in the interface corresponds to the tablet, that is, when detecting the tap operation on the function icon, the control center displays the second interaction function corresponding to the tablet. When the operation 1 is for the control corresponding to the smart speaker, the function icon displayed in the interface corresponds to the smart speaker, that is, when detecting the tap operation on the function icon, the control center displays the second interaction function corresponding to the smart speaker.

In another example, when determining that the mobile phone needs to perform device interaction, the smart decision-making module may determine the current application scenario of the mobile phone based on a current running status of the mobile phone, and may determine, based on Table 3, the first interaction function corresponding to the application scenario.

It is assumed that the mobile phone runs a music application in the foreground, and the music application is in a music playing state. The smart decision-making module may determine that the current application scenario of the mobile phone is an audio scenario, and may determine, based on Table 3, the first interaction function 00A_sound, 011_relay, and 012_relay that correspond to the audio scenario.

For each first interaction function, the smart decision-making module may determine, based on Table 4, a constraint condition A and a constraint condition B that correspond to the first interaction function, obtain the device information of the mobile phone and the device information of each associated device, to determine, based on the device information of the mobile phone, the device information of each associated device, and the constraint condition A and the constraint condition B that correspond to the first interaction function, a second interaction function corresponding to each associated device, and add information about the second interaction function corresponding to each associated device to the device information of each associated device.

It is assumed that the devices associated with the mobile phone include a tablet, a notebook computer, and a smart speaker. A constraint condition A that corresponds to 00A_sound and that may be determined by the smart decision-making module based on Table 4 includes: (1) A device type of a transmitting end is the mobile phone or the tablet. (2) The transmitting end supports the sound casting. A constraint condition B corresponding to 00A_sound includes: (1) A device type of a receiving end is the smart speaker. (2) The receiving end supports the sound casting. Similarly, a constraint condition A that corresponds to 011_relay and that may be determined by the smart decision-making module based on Table 4 includes: (1) The device type of the transmitting end is the mobile phone. (2) The transmitting end supports the application relay. A constraint condition B corresponding to 011_relay includes: (1) The device type of the receiving end is the tablet. (2) The receiving end supports the application relay. Similarly, a constraint condition A that corresponds to 012_relay and that may be determined by the smart decision-making module based on Table 4 includes: (1) The device type of the transmitting end is the mobile phone or the tablet computer. (2) The transmitting end supports the application relay. A constraint condition B corresponding to 012_relay includes: (1) The device type of the receiving end is the notebook computer. (2) The receiving end supports the application relay.

It is assumed that the smart decision-making module determines, based on device information A of the tablet, that the tablet supports the application relay, determines, based on device information B of the smart speaker, that the smart speaker supports the sound casting, and determines, based on device information D of the notebook computer, that the notebook computer supports the application relay. In this case, the smart decision-making module may determine that a second interaction function corresponding to the tablet is 011_relay, a second interaction function corresponding to the smart speaker is 00A_sound, and a second interaction function corresponding to the notebook computer is 012_relay, add information about 011_relay corresponding to the tablet to the device information A of the tablet, add information about 00A_sound corresponding to the smart speaker to the device information B of the smart speaker, add information about 012_relay corresponding to the notebook computer to the device information D of the notebook computer, and separately send, to the control center, the device information A to which the information about 011_relay is added, the device information B to which the information about 00A_sound is added, and the device information D to which the information about 012_relay is added.

Similar to the foregoing descriptions, after obtaining the device information A to which the information about 01 1_relay is added, the device information B to which the information about 00A_sound is added, and the device information D to which the information about 012_relay is added, the control center may directly display each second interaction function, or may first display a function icon, and when detecting a tap operation on the function icon, may display each second interaction function.

Therefore, the user may directly tap the second interaction function displayed in the interface, to implement device interaction between the mobile phone and the selected associated device (for example, the tablet).

In other words, in this embodiment of this application, the mobile phone may determine, based on the current application scenario of the mobile phone, the first interaction function that may be required in the application scenario, and may intelligently determine, from the interaction functions supported by the second electronic device based on the first interaction function, the device information of the mobile phone, and the device information of the second electronic device, the second interaction function that may be required in the current application scenario of the mobile phone, to present, to the user, the second interaction function that may need to be used by the user, so that the user selects an interaction function, to improve convenience of the user in performing device interaction, improve device interaction efficiency, improve user experience, and have strong usability and practicality.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

Corresponding to the device interaction method in the foregoing embodiments, an embodiment of this application further provides a device interaction apparatus. Modules of the apparatus may correspondingly implement steps of the device interaction method.

It should be noted that, content such as information exchange and execution processes between the foregoing apparatuses/units are based on a same concept as those in the method embodiments of this application. For specific functions and brought technical effects of the foregoing apparatuses/units, refer to the method embodiments. Details are not described herein again.

Persons skilled in the art may clearly understand that, for the purpose of convenient and brief description, division into the foregoing functional units and modules is merely used as an example for description. In an actual application, the foregoing functions may be allocated to different functional units and modules for implementation based on a requirement. In other words, an inner structure of the apparatus is divided into different functional units or modules, to implement all or some of the functions described above. Functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units or modules in the foregoing system, refer to a corresponding process in the method embodiments. Details are not described herein again.

An embodiment of this application further provides an electronic device. The electronic device includes at least one memory, at least one processor, and a computer program that is stored in the at least one memory and that can be run on the at least one processor. When the processor executes the computer program, the electronic device is enabled to implement steps in any one of the foregoing method embodiments. For example, a structure of the electronic device may be shown in FIG. 1.

An embodiment of this application further provides a computer-readable storage medium. The computer-readable storage medium stores a computer program. When the computer program is executed by a computer, the computer is enabled to implement steps in any one of the foregoing method embodiments.

An embodiment of this application provides a computer program product. When the computer program product runs on an electronic device, the electronic device is enabled to implement steps in any one of the foregoing method embodiments.

When an integrated unit is implemented in a form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code. The computer program code may be in a source code form, an object code form, an executable file form, some intermediate forms, or the like. The computer-readable storage medium may include at least any entity or apparatus that can carry computer program code to an apparatus/electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disk. In some jurisdictions, the computer-readable storage medium cannot be an electrical carrier signal or a telecommunication signal according to legislation and patent practices.

In the foregoing embodiments, descriptions of all embodiments have respective focuses. For a part that is not described in detail in an embodiment, refer to related descriptions in another embodiment.

Persons of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. A device interaction method, applied to a first electronic device, wherein the method comprises:
determining a current application scenario of the first electronic device, and determining at least one first interaction function corresponding to the application scenario;
determining, based on the first interaction function, device information of the first electronic device, and device information of a second electronic device, a second interaction function corresponding to the second electronic device, wherein the second interaction function is one or more items in the first interaction function, and the second electronic device is associated with the first electronic device;
displaying the second interaction function corresponding to the second electronic device; and
in response to a first operation on a third interaction function, determining to perform the third interaction function with the second electronic device, wherein the third interaction function is one item in the second interaction function corresponding to the second electronic device.

2. The method according to claim 1, wherein the determining a current application scenario of the first electronic device comprises:
detecting a preset operation; and
in response to the preset operation, determining the current application scenario of the first electronic device.

3. The method according to claim 2, wherein the preset operation comprises: enabling a preset area of the first electronic device to be in touch with a preset area of the second electronic device.

4. The method according to claim 2, wherein the preset operation comprises: entering a first interface of the first electronic device, or tapping a second control in the first interface, or dragging the second control in the first interface and releasing the second control when a distance between the second control and a first control is less than a preset threshold, wherein the first interface comprises the second control, or the first interface comprises the first control and the second control, the first control is a control corresponding to the first electronic device, and the second control is a control corresponding to the second electronic device.

5. The method according to claim 4, wherein the displaying the second interaction function corresponding to the second electronic device comprises:
in response to a second operation on the second control, displaying the second interaction function corresponding to the second electronic device.

6. The method according to claim 5, wherein the second operation comprises: tapping the second control, or dragging the second control and releasing the second control when the distance between the second control and the first control is less than the preset threshold.

7. The method according to claim 4, wherein after the determining a second interaction function corresponding to the second electronic device, the method further comprises:
displaying a function icon corresponding to the second interaction function; and
the displaying the second interaction function corresponding to the second electronic device comprises:
in response to a tap operation on the function icon, displaying the second interaction function corresponding to the second electronic device.

8. The method according to claim 4, wherein after the determining a second interaction function corresponding to the second electronic device, the method further comprises:
in response to a third operation on the second control, displaying a function icon corresponding to the second interaction function; and
the displaying the second interaction function corresponding to the second electronic device comprises:
in response to a tap operation on the function icon, displaying the second interaction function corresponding to the second electronic device.

9. The method according to claim 8, wherein the third operation comprises: tapping the second control, or dragging the second control and releasing the second control when the distance between the second control and the first control is less than the preset threshold.

10. The method according to any one of claims 1 to 9, wherein the determining at least one first interaction function corresponding to the application scenario comprises:
determining, based on a preset correspondence between an application scenario and an interaction function, the at least one first interaction function corresponding to the application scenario.

11. The method according to any one of claims 1 to 9, wherein the determining at least one first interaction function corresponding to the application scenario comprises:
determining, based on the device information of the first electronic device and a preset correspondence between an application scenario and an interaction function, the first interaction function corresponding to the application scenario, wherein the device information of the first electronic device comprises information about an interaction function supported by the first electronic device.

12. The method according to any one of claims 1 to 11, wherein the determining, based on the first interaction function, device information of the first electronic device, and device information of a second electronic device, a second interaction function corresponding to the second electronic device comprises:
determining, for each first interaction function, a first constraint condition and a second constraint condition that correspond to the first interaction function, wherein the first constraint condition is a condition that needs to be met by a transmitting end corresponding to the first interaction function, and the second constraint condition is a condition that needs to be met by a receiving end corresponding to the first interaction function; and
determining, from the first interaction function based on the first constraint condition, the device information of the first electronic device, the second constraint condition, and the device information of the second electronic device, the second interaction function corresponding to the second electronic device.

13. An electronic device, comprising a memory, a processor, and a computer program that is stored in the memory and that can be run on the processor, wherein when the processor executes the computer program, the electronic device is enabled to implement the device interaction method according to any one of claims 1 to 12.

14. A computer-readable storage medium, wherein the computer-readable storage medium stores a computer program, and when the computer program is executed by a computer, the computer is enabled to implement the device interaction method according to any one of claims 1 to 12.
